# EUROPEAN PATENT SPECIFICATION

(11) **EP 0 517 328 B1**
(45) Date of publication and mention of the grant of the patent: **30.08.1995**
(21) Application number: 92201585.4
(22) Date of filing: 02.06.1992
(51) Int. Cl.: F16K 1/30, F17C 13/00

(54) **Valve for liquefied gas bottle**
Ventil für Flüssiggasbehälter
Vanne pour récipient de gaz liquide

(30) Priority: 05.06.1991 GB 9112050
(43) Date of publication of application: 09.12.1992
(73) Proprietor: SHELL INTERNATIONALE RESEARCH MAATSCHAPPIJ B.V., 2596 HR Den Haag (NL)
(72) Inventor: Tomsett, Alan Clive, Waterloo, London SE1 (GB)

(56) References cited:
- EP-A- 0 393 234
- FR-A- 1 543 482
- GB-A- 1 019 524

## Description

The present invention relates to a valve for filling and drawing off liquefied gas bottles.

In particular the present invention concerns such a valve which comprises a valve housing and a valve plug, the valve housing comprising a tubular top section which provides a mouth and a flow passage for vaporized liquefied gas, the valve plug being axially movable through the tubular top section between an open and a closed position of the valve, said tubular top section having a radially inwardly protruding annular rim allowing a narrow passage for the axially movable valve plug, the valve plug having a cylindrical wall side extending upstream to a radially outwardly protruding annular bottom edge member, in closed position of the valve said bottom edge member as a stop member being forced against said rim, an elastic annular outlet sealing member, which is arranged adjacent to said rim, and an elastic annular connector sealing member, which is arranged between said outlet sealing member and the mouth in a recess in the flow passage of the tubular top section. Such valves are known for a long time and meanwhile many improvements have been made on such valves.

For example FR-A-1530375 a valve for coupling a bottle for liquefied gas to a pressure regulator, to be arranged between the bottle and a consumer device, is disclosed. In detail the valve comprises a main valve section for opening and closing an outlet conduit respectively during and after application of the regulator. Besides a relief valve section is provided.

The construction of laid main valve section allows reliable guiding and stopping a valve plug moving in a tubular top section and resulting in closing the outlet conduit.

In closed position a first elastic annulus sealing arranged in a support which is integrally formed with the plug body is forced against an annular seat. Furthermore, a narrow stemlike protrusion is screwed upon the plug being inserted into the pressure regulator mouth in the case of coupling both. In coupled position the outlet conduit of the pressure regulator is sealed by means of a second o-ring sealing arranged in a recess in the wall of the tubular top section. Thus in said closed valve position the outer end of the tubular top section forms an empty space only containing said protrusion.

Since such bottles are applied under most different circumstances, dust particles, water, ice, or any other material can penetrate into said empty space. Consequently sealing components can be affected. For example such a sealing component can swell undesirably, corrosion is caused, and real danger exists if the above-mentioned matter comes into contact with certain gases contained in the bottle or will drop into the bottle during coupling. Thus, such a wide space is considered disadvantageous.

In the EP-A-393234 another valve for liquefied gas bottles is disclosed in accordance with the preamble of claim 1. In closed position of said valve which comprises also a valve plug, extending to the mouth of the tubular top section and having a relatively large diameter, not only a first elastic annulus provides a seal but the valve plug also contacts a second outer sealing ring. Because in this construction the second outer sealing member has a substantial axial length and no empty space remains, no dust or any other material will accumulate in the tubular top section and during coupling to the pressure regulator a continuous sealing is provided, thereby pressing the plug inwardly into said top section.

In this construction unfortunate failing of the outer ring can be the case if the bottle was not used for a long time. Then the valve plug did contact and compress said ring continuously. After forcing the plug inwardly in the upstream direction for coupling the pressure regulator to the bottle, relaxation of the sealing ring to its original form takes a long time, thus resulting in insufficient or even no sealing between the pressure regulator and the tubular top section. In the latter case even gas could escape from inside the bottle into the surroundings. Thus, this valve design needs a double seal arrangement resulting in a rather complex construction.

Moreover it will be clear that both valve devices are complex by including many separate components. Thus, if replacement of certain components is necessary time consuming effort has to be made.

Thus, it is an object of the present invention to come to a valve design which ensures reliable sealing in all possible circumstances.

It is another object of the invention to avoid substantially penetration of dust or any other detrimental or dangerous material into the tubular top section mouth of the valve or even into the bottle.

It is a further object of the invention to come to a valve design having a more simple sealing system.

It is yet a further object of the invention to provide a sealing system which can be replaced in a simple way without the need to dismantle the valve.

Therefore, in accordance with the characterising portion of claim 1 the valve as indicated above is characterized in that said connector sealing member leaves a narrow annular spacing between the cylindrical wall side of the valve plug and said connector sealing member.

Such a narrow spacing is advantageous in that at the one side penetration of detrimental material or moisture is avoided substantially and at the other side the elasticity of the outer sealing member is maintained.

In a preferred embodiment of the valve in accordance with the invention said annular outlet sealing member and said connector sealing member form one elastic bushing, arranged in a recess in the flow passage of the tubular top section, and a shoulder section is comprised between the wall side and the bottom edge member of the valve plug, in closed position said shoulder section sealing against said bushing.

Although in closed position the inner upstream part of said one bushing is compressed for accomplishing reliable sealing, no compression or deformation occurs over a substantial height of said bushing facing the cylindrical wall side of the valve plug. Thus, advantageously the full elasticity is available as soon as coupling of the bottle to the pressure regulator has to be carried out.

Furthermore, a simple sealing system is provided as only one sealing member is arranged in the tubular top section of the valve. It will be clear that such a system allows reliable, fast, and easy replacement of the bushing sealing member from the outside.

The invention will now be described by way of example in more detail with reference to the accompanying drawings, in which,
Fig. 1 shows one half of a cross-section along the axis of the valve in accordance with the invention; and
Figures 2A, 2B and 2C show cross-section halves similar to that of Fig. 1 concerning preferred embodiments of the valve in accordance with the invention.

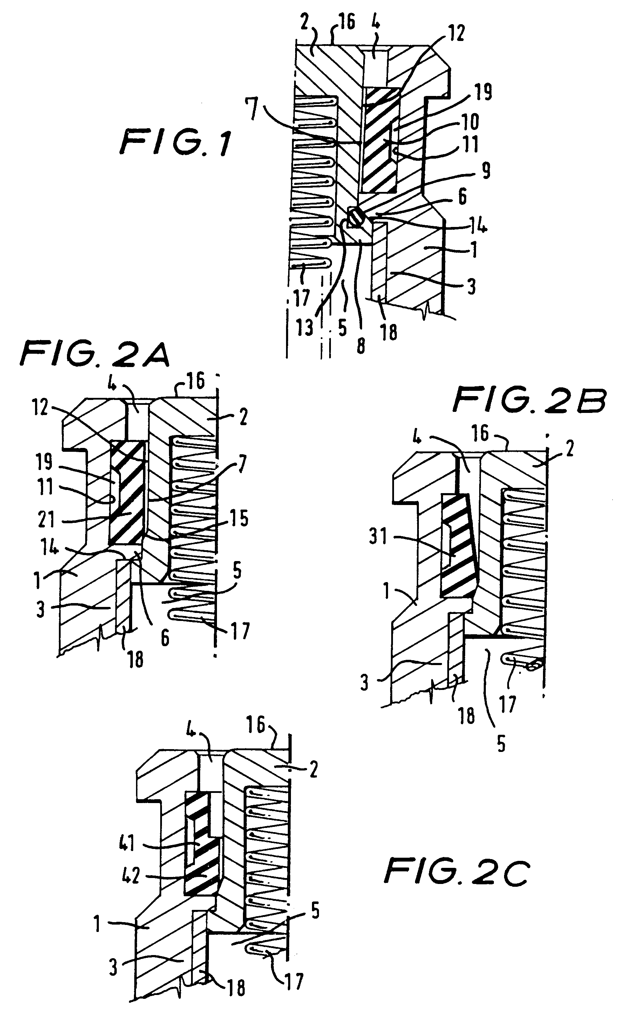

In the figures 1 and 2A representing the basic ideas of the present invention all components are numbered whereas the corresponding ones are referenced correspondingly.

In the figures 2B and 2C being further embodiments of the one of fig. 2A only the relevant differences are referenced.

As to all said figures it may be self evident that the valves shown are axial symmetric.

Referring to figure 1 one half of a cross-section along the axis of a valve arranged in the mouth of an inlet/outlet conduit of a liquefied gas bottle for filling and drawing off liquefied gas therefrom is shown. The valve comprises a housing 1, having a tubular top section 3, provided with further components being described hereinafter. In a conventional way said top section 3 comprises a valve mouth 4 and a flow passage 5 for vaporized liquefied gas. The valve further comprises a valve plug 2 which is axially movable through said tubular top section 3. Top section 3 further comprises a radially inwardly protruding annular rim 6. As can be seen from the figure the upper part of the valve plug 2 comprises a cylindrical wall side 7, extending upstream to a lower part consisting of a radially outwardly protruding annular bottom edge member 8.

The valve comprises two sealing members 9, 10, being respectively an elastic outlet sealing member 9 and an elastic annular connector sealing member 10.

The outlet sealing member 9 is housed in a groove 13 arranged in the valve plug body just above the bottom edge member 8.

The connector sealing member 10 is arranged in a recess 11 in the tubular top section 3 just above the rim 6.

The valve plug when moved inwardly or outwardly, i.e. upstream or downstream when the gas stream direction during drawing off is concerned, is guided by means of the rim 6, whereas a further guiding means 18 can be provided.

As shown in figure 1 a narrow spacing 12 is left between the cylindrical wall 7 of the valve plug 2 and the inner surface of the connector sealing member 10.

In closed position of the valve the plug 2 is forced with its bottom edge member 8 as a stop member by the intermediate outlet sealing member 9 against a contact surface section 14 of the rim 6. For example, as shown in figure 1, said rim has a chamfered surface section. By means of said outlet sealing member 9 outward flow of gases from inside the bottle into the surrounding atmosphere is prevented.

The way of forcing the valve plug 2 to its closed position is accomplished by means of a compression spring 17 (for reason of clarity only partly shown). However, other advantageous means for that purpose may be employed.

The connector sealing member 10 functions as a seal during coupling. Since in the above discussed closed position no deformation takes place the elasticity of sealing member 10 warrants sealing between the valve tubular top section 3 and a pressure regulator inlet being coupled to the valve.

Furthermore, advantageously the narrow spacing 12 has a width in the range respectively from at least 0.3 mm to up to 1.3 mm, thereby preventing penetration of dust particles or any other material into said spacing.

Advantageously the connector sealing member 10 is a bushing, thus enabling good guiding and sealing of the pressure regulator inlet being inserted.

In order to further improve the elasticity of the connector sealing member 10 being arranged in the recess 11 a further circumferential groove 19 can be provided advantageously within the sealing member at its outer side facing the wall side of the tubular top section. Thereby both coupling and arranging the pressure regulator inlet in the mouth and pushing aside the valve plug can be carried out with less work.

A further decrease of empty spacings left in the mouth 4 of the valve is resulted by arranging a valve plug 2 extending with its top side 16 to equal height with the mouth end. The mouth width as shown in figure 1 is only schematically and further optimal dimensioning of such widths will be clear to those skilled in the art.

It is noted as a further detail that guiding means 18, indicated in figure 1 as a separate component, can be made of the same substance as the tubular top section 3.

Referring now to the figures 2A to 2C also cross-section halves similar to that of figure 1 are shown. According to a preferred embodiment of the invention only one sealing member 21, 31, 41 is shown, both functioning for outlet sealing and connector sealing. Consequently a slight modification is made in rim 6 in that a shoulder section 15 is provided as a transition between the bottom edge member 8 and the cylindrical wall side 7 having a continuously varying diameter. Thus, the difference between the greater diameter adjacent to the bottom edge member and the smaller diameter adjacent to the wall side will bridge the width of the narrow spacing 12.

As soon as the valve plug 2 is moved to its closed position the inner upstream part of the one bushing 21, 31, 41 is compressed and forms a sealing for the gas present within the bottle.

Dependent on the amount of compression of said one bushing 21, 31, 41 the bottom edge member 8 can make immediate contact with the rim 6. As schematically shown in the figures 2A to 2C said member 8 and rim 6 are provided with mutually corresponding contact surface sections.

As to the way of connector sealing some difference is observed between the embodiments according to the respective figures 2A to 2C.

Similar to figure 1 also in figure 2A a bushing having a substantially rectangular cross-section is shown resulting in similar coupling and sealing conditions.

In figure 2B the one elastic bushing 31 has a substantially trapezoidal cross-section, the inner diameter thereof being decreasing towards the bottom edge member 8 of the valve plug 2 resulting in a progressively increasing clamping of the pressure regulator inlet being inserted during coupling.

In figure 2C yet another bushing embodiment is shown comprising two different inner diameter sections, the smaller inner diameter section 42 being arranged to the bottom edge member 8 of the valve plug 2. Thus in the beginning of the coupling procedure as described above reduced clamping results.

The elastic materials to be applied for the respective sealing members 9, 10 and the bushings 21, 31, 41 as described before can be chosen dependent on the circumstances to be met such as gases contained in the bottle or the environment in which the gases are intended to be used.

## Claims

1. A valve for filling and drawing off liquefied gas bottles, comprising a valve housing (1) and a valve plug (2),
- the valve housing (1) comprising a tubular top section (3) which provides a mouth (4) and a flow passage (5) for vaporized liquefied gas,
- the valve plug (2) being axially movable through the tubular top section (3) between an open and a closed position of the valve, said tubular top section having a radially inwardly protruding annular rim (6) allowing a narrow passage for the axially movable valve plug, the valve plug having a cylindrical wall side (7) extending upstream to a radially outwardly protruding annular bottom edge member (8), in closed position of the valve said bottom edge member acting as a stop member being forced against said rim,
- an elastic annular outlet sealing member (9), which is arranged adjacent to said rim, and
- an elastic annular connector sealing member (10), which is arranged between said outlet sealing member and the mouth in a recess (11) in the flow passage of the tubular top section, characterized in that said connector sealing member (10) leaves a narrow annular spacing (12) between the cylindrical wall side of the valve plug and said connector sealing member.

2. The valve as claimed in claim 1, wherein said annular outlet sealing member and said connector sealing member form one elastic bushing, (21; 31; 41) arranged in a recess (11) in the flow passage of the tubular top section, and wherein a shoulder section is comprised between the wall side and the bottom edge member of the valve plug, in closed position said shoulder section sealing against said bushing.

3. The valve as claimed in claim 1 or 2, wherein said narrow spacing (12) has a width in the range respectively from at least 0.3 mm to up to 1.3 mm.

4. The valve as claimed in claim 1, 2, or 3, wherein said bushing (21) has a substantially rectangular cross-section.

5. The valve as claimed in claim 1, 2, or 3, wherein said bushing (31) has a substantially trapezoidal cross-section, the inner diameter thereof being decreasing towards the bottom edge member of the valve plug.

6. The valve as claimed in claim 1, 2, or 3, wherein said bushing (41) comprises two different inner diameter sections, the smaller inner diameter section being arranged adjacent to the bottom edge member of the valve plug.

7. The valve as claimed in claim 1, wherein the valve plug has a top side which in closed position of the valve is substantially at equal height with the mouth (4).

## Patentansprüche

1. Ventil mit einem Ventilgehäuse (1) und einem Ventilküken (2) zum Befüllen von Flüssiggasbehältern und zum Ablassen von Flüssiggas aus solchen Behältern, wobei
- das Ventilgehäuse (1) einen rohrförmigen oberen Abschnitt (3) umfaßt, der mit einem Mund (4) und einem Strömungsdurchgang (5) für dampfförmiges Flüssiggas ausgestattet ist;
- das Ventilküken (2) durch den rohrförmigen oberen Abschnitt (3) zwischen einer offenen und einer geschlossenen Position des Ventiles axial bewegbar ist, der genannte rohrförmige obere Abschnitt einen radial nach innen vorstehenden ringförmigen Rand (6) umfaßt, der dem axial bewegbaren Ventilküken einen engen Durchgang ermöglicht, wobei das Ventilküken eine zylindrische Wandseite (7) aufweist, die sich entgegen der Strömungsrichtung bis zu einem radial nach außen vorstehenden ringförmigen unteren Kantenelement (8) erstreckt, und das genannte untere Kantenelement in der geschlossenen Position des Ventiles als Anschlagelement gegen den genannten Rand gedrückt wird;
- ein elastisches ringförmiges Auslaßabdichtungselement (9) angrenzend zum genannten Rand angeordnet ist; und
- ein elastisches ringförmiges Verbindungsabdichtungselement (10) zwischen dem genannten Auslaßabdichtungselement und dem Mund in einer Vertiefung (11) im Strömungsdurchgang des rohrförmigen oberen Abschnittes angeordnet ist; dadurch gekennzeichnet, daß das genannte Verbindungsabdichtungselement (10) einen engen ringförmigen Zwischenraum (12) zwischen der zylindrischen Wandseite des Ventilkükens und dem genannten Verbindungsabdichtungselement frei läßt.

2. Ventil nach Anspruch 1, wobei das genannte ringförmige Auslaßabdichtungselement und das genannte Verbindungsabdichtungselement eine elastische Buchse (21; 31; 41) bilden, die in einer Vertiefung (11) im Strömungsdurchgang des rohrförmigen oberen Abschnittes angeordnet ist, und ein Schulterabschnitt zwischen der Wandseite und dem unteren Kantenelement des Ventilkükens vorgesehen ist, wobei der genannte Schulterabschnitt in der geschlossenen Position für eine Abdichtung gegenüber der genannten Buchse sorgt.

3. Ventil nach Anspruch 1 oder 2, wobei der genannte enge Zwischenraum (12) eine Breite im Bereich von zumindest 0,3 mm bis 1,3 mm aufweist.

4. Ventil nach Anspruch 1, 2 oder 3, wobei die genannte Buchse (21) einen im wesentlichen rechtwinkligen Querschnitt besitzt.

5. Ventil nach Anspruch 1, 2 oder 3, wobei die genannte Buchse (31) einen im wesentlichen trapezförmigen Querschnitt besitzt und deren Innendurchmesser zum unteren Kantenelement des Ventilkükens hin abnimmt.

6. Ventil nach Anspruch 1, 2 oder 3, wobei die genannte Buchse (41) zwei Abschnitte mit unterschied-lichem Innendurchmesser umfaßt und der Abschnitt mit dem kleineren Innendurchmesser angrenzend zum unteren Kantenelement des Ventilkükens angeordnet ist.

7. Ventil nach Anspruch 1, wobei das Ventilküken eine Oberseite besitzt, die in der geschlossenen Position des Ventiles im wesentlichen die gleiche Höhe wie der Mund (4) aufweist.

## Revendications

1. Vanne destinée au remplissage et au soutirage de bouteilles de gaz liquéfié, comportant un boîtier de vanne (1) et un bouchon de vanne (2),
- le boîtier de vanne (1) comportant une partie supérieure tubulaire (3) qui fournit une embouchure (4) et un passage d'écoulement (5) pour le gaz liquéfié vaporisé,
- le bouchon de vanne (2) étant axialement mobile à travers la partie supérieure tubulaire (3) entre une position ouverte et une position fermée de la vanne, ladite partie supérieure tubulaire ayant un rebord (6) annulaire faisant saillie radialement vers l'intérieur fournissant un passage étroit pour le bouchon de vanne axialement mobile, le bouchon de vanne ayant une paroi latérale cylindrique (7) s'étendant en amont vers un élément formant bord inférieur (8) annulaire faisant saillie radialement vers l'extérieur, ledit élément formant bord inférieur (8) agissant dans la position fermée de la vanne en tant qu'élément d'arrêt en étant poussé contre ledit rebord,
- un élément d'étanchéité de sortie (9) annulaire élastique, qui est agencé adjacent audit rebord, et
- un élément d'étanchéité pour raccord (10) annulaire élastique, qui est agencé entre ledit élément d'étanchéité de sortie et l'embouchure, dans une cavité (11) existant dans le passage d'écoulement de la partie supérieure tubulaire, caractérisée en ce que ledit élément d'étanchéité pour raccord (10) laisse un espace annulaire étroit (12) entre la paroi latérale cylindrique du bouchon de vanne et ledit élément d'étanchéité pour raccord.

2. Vanne selon la revendication 1 dans laquelle ledit élément d'étanchéité de sortie annulaire et ledit élément d'étanchéité pour raccord forment une douille élastique (21; 31; 41), agencée dans une cavité (11) existant dans le passage d'écoulement de la partie supérieure tubulaire, et dans laquelle une partie formant épaulement est agencée entre la paroi latérale et l'élément formant bord inférieur du bouchon de vanne, ladite partie formant épaulement assurant en position fermée l'étanchéité contre ladite douille.

3. Vanne selon la revendication 1 ou 2, dans laquelle ledit espace étroit (12) a une largeur située dans la plage allant respectivement d'au moins 0,3 mm jusqu'à 1,3 mm.

4. Vanne selon la revendication 1, 2, ou 3, dans laquelle ladite douille (21) a en coupe une forme à peu près rectangulaire.

5. Vanne selon la revendication 1, 2, ou 3, dans laquelle ladite douille (31) a une coupe à peu près trapézoïdale, le diamètre intérieur de celle-ci diminuant en direction de l'élément formant bord inférieur du bouchon de vanne.

6. Vanne selon la revendication 1, 2 ou 3, dans laquelle ladite douille (41) comporte deux parties de diamètre intérieur différent, la partie à diamètre intérieur plus petit étant agencée adjacente à l'élément formant bord inférieur du bouchon de vanne.

7. Vanne selon la revendication 1, dans laquelle le bouchon de vanne a un côté supérieur qui en position fermée de la vanne est à peu près à la même hauteur que l'embouchure (4).
